# EUROPÄISCHE PATENTSCHRIFT

(11) **EP 3 310 600 B1**
(45) Veröffentlichungstag und Bekanntmachung des Hinweises auf die Patenterteilung: **05.08.2020**
(21) Anmeldenummer: 16728963.6
(22) Anmeldetag: 14.06.2016
(51) Int. Cl.: B60J 1/20

(54) **BESCHATTUNGSVORRICHTUNG FÜR EINE KRAFTFAHRZEUGSCHEIBE**
SHADING DEVICE FOR A MOTOR VEHICLE WINDOW PANE
DISPOSITIF POUR OMBRER UNE VITRE D'UN VÉHICULE

(30) Priorität: 19.06.2015 DE 102015007777
(43) Veröffentlichungstag der Anmeldung: 25.04.2018
(73) Patentinhaber: BOS GmbH & Co. KG, 73760 Ostfildern (DE)
(72) Erfinder: SAUER, Roman, 72663 Grossbettlingen (DE)
(74) Vertreter: Patentanwälte Ruff, Wilhelm, Beier, Dauster & Partner mbB
(86) Internationale Anmeldenummer: PCT/EP2016/063617
(87) Internationale Veröffentlichungsnummer: WO 2016/202793

(56) Entgegenhaltungen:
- DE-A1-102012 200 259
- DE-A1-102013 006 761
- DE-A1-102014 211 617
- DE-U1-202007 012 982
- US-A1- 2012 247 694

## Beschreibung

Die Erfindung betrifft eine Beschattungsvorrichtung für eine Kraftfahrzeugscheibe mit einem Beschattungsgebilde mit einem stirnseitig an dem Beschattungsgebilde angebrachten Auszugprofil, welches mit Hilfe von Antriebsübertragungsmitteln zwischen einer abgesenkten Ruhestellung und einer ausgefahrenen Funktionsstellung in fahrzeugfesten seitlichen Führungsschienen verlagerbar ist, wobei das Beschattungsgebilde in der Ruhestellung durch einen Durchtritt hindurch in einen fahrzeugfesten Schacht abgesenkt ist, wobei der Durchtritt durch einen zwischen einer Öffnungs- und einer Schließstellung schwenkbeweglichen Deckel verschließbar ist, und wobei eine Steuermechanik zum Öffnen und Schließen des Deckels vorgesehen ist, die an eine Verlagerungsbewegung des Auszugprofils gekoppelt ist. Dokument DE 10 2013 006761 offenbart eine gattungsgemäße Beschattungsvorrichtung.

Eine derartige Beschattungsvorrichtung ist aus der Offenlegungsschrift DE 10 2008 045 053 A1 bekannt. Die bekannte Beschattungsvorrichtung weist einen mit einer Tür oder einer Fahrzeugkarosserie verbundenen Rollokasten auf, welcher mit einem schwenkbeweglichen Deckel verschließbar ist. In dem Rollokasten ist eine Wickelwelle drehbar gelagert, auf welcher eine Rollobahn aufwickelbar ist. An der Rollobahn ist stirnseitig ein Zugstab befestigt, welcher in einer Schließstellung des Deckels auf eine Druckfeder wirkt. Wird der Zugstab mittels eines Zugseils aus seiner Schließstellung angehoben, drückt die bei geschlossenem Deckel vorgespannte Druckfeder den Deckel in seine Öffnungsstellung. Wird die Rollobahn auf die Rollowelle aufgewickelt, gelangt in einer Endphase des Aufwickelns der Zugstab in Kontakt mit der Druckfeder, sodass die Druckfeder gespannt und der Deckel geschlossen wird.

Aus der Offenlegungsschrift DE 10 2012 200 259 A1 ist ein Abdecksystem für eine Kraftfahrzeugscheibe mit einer zwischen einer Stauposition und einer Abdeckposition verlagerbaren Abdeckung bekannt. Die Abdeckung weist eine Auszugstange auf, welche mit in Führungsschienen verlagerbaren Gleitelementen verbunden ist. Eine Basis des Abdecksystems weist einen Aufnahmeraum für die Abdeckung mit einem Austrittsspalt auf. Der Austrittsspalt ist mit einer Deckeleinheit verschließbar. Zwischen der Basis und der Deckeleinheit sind Schenkelfedern angeordnet, welche die Deckeleinheit in Öffnungsrichtung mit einem konstanten Drehmoment beaufschlagen. Wird die Abdeckung in die Stauposition verfahren, wirkt bei einer Annäherung an eine Endstellung eines der Gleitelemente der Auszugstange auf ein mit der Deckeleinheit verbundenes Gleitelement, welches ein Schließmoment in die Deckeleinheit einbringt, das größer ist als das Drehmoment der Schenkelfedern in Öffnungsrichtung, und der Deckel wird geschlossen.

Aufgabe der Erfindung ist es, eine Beschattungsvorrichtung der eingangs genannten Art zu schaffen, die in einer Ruhestellung und einer Funktionsstellung des Beschattungsgebildes ein optisch ansprechendes Erscheinungsbild aufweist.

Diese Aufgabe wird dadurch gelöst, dass die Steuermechanik einen Zugmitteltrieb aufweist, der abhängig von einem Hindurchtreten des Auszugprofils durch den Durchtritt eine Steuerung des Deckels zwischen der Öffnungsstellung und einer Zwischenstellung vornimmt, die sich zwischen der Öffnungs- und der Schließstellung des Deckels befindet. Insbesondere in einer Vollauszugposition des Auszugprofils nimmt der Deckel die Zwischenstellung ein, in welcher er berührungsfrei oder mit leichtem Druck an dem Beschattungsgebilde anliegen kann. Vorteilhafterweise überdeckt der Deckel dabei den Durchtritt weitgehend, sodass durch den Durchtritt keine Verschmutzungen wie bspw. Staub eindringen können. In einer Zwischenstellung ist der Deckel näher an das Beschattungsgebilde herangeführt, so dass der Deckel weniger weit nach oben in ein Blickfeld der Fahrzeugscheibe hineinragt als in der Öffnungsstellung. Dadurch ergibt sich ein optisch ansprechendes Erscheinungsbild. Zudem können durch den weniger weit nach oben abragenden Deckel Verletzungen bei einem Fahrzeugaufprall reduziert werden.

In Ausgestaltung der Erfindung ist der Zugmitteltrieb zumindest abschnittsweise federelastisch ausgeführt. Vorteilhafterweise ist somit ein Überlastschutz gegeben und ebenso das Verletzungsrisiko durch Quetschung von Körperteilen minimiert. Eine federelastische Funktion kann an einem oder mehreren Funktionsstellen des Zugmitteltriebs vorgesehen sein.

In weiterer Ausgestaltung umfasst der Zugmitteltrieb ein elastisches Seil oder wenigstens ein federelastisches Element. Das elastische Seil kann gummielastisch sein oder einen gummielastischen Abschnitt aufweisen. Alternativ kann ein nichtelastisches Seil einen federelastischen Abschnitt wie bspw. eine Schraubenzugfeder aufweisen. Vorteilhafterweise ergeben sich somit vielfältige Auslegungs- und Anpassungsmöglichkeiten, sodass eine Gestaltung des Zugmitteltriebs entsprechend eines zur Verfügung stehenden Bauraums vorgenommen werden kann.

In weiterer Ausgestaltung der Erfindung erstreckt sich der Zugmitteltrieb zwischen einem im Bereich wenigstens einer seitlichen Führungsschiene angeordneten Mitnehmer und einem mit dem Deckel drehfesten Angriffsbereich. Somit ist eine Wirkverbindung zwischen der Führungsschiene, dem Mitnehmer und dem Deckel gegeben. Vorteilhafterweise kann somit eine Verlagerung des Deckels mit relativ wenigen Bauteilen bewirkt werden. Dabei kann sowohl ein Öffnungs- als auch ein Schließmoment in den Angriffsbereich eingeleitet werden. Die Öffnungs- und Schließmomente können alternativ auch in unterschiedliche Bereiche des Deckels eingeleitet werden. Der oder die Angriffsbereiche können direkt am Deckel vorgesehen sein oder separate, mit dem Deckel verbundene Bauteile sein.

In weiterer Ausgestaltung der Erfindung weist der Zugmitteltrieb eine Umlenkung auf, die eine Bewegungsrichtung des Mitnehmers bei einer Überführung des Auszugprofils aus der Ruhestellung in die Funktionsstellung in eine Schließbewegung des Deckels überträgt. Die Umlenkung kann feststehend oder mit der Auszugsbewegung des Auszugprofils gekoppelt und somit in etwa in einer Bewegungsrichtung des Auszugprofils verlagerbar sein. Bei Verwendung einer verlagerbaren Umlenkung, insbesondere in Form einer elastisch nachgiebig gelagerten Umlenkrolle kann alternativ ein nicht elastischer Zugmitteltrieb vorgesehen sein.

In weiterer Ausgestaltung der Erfindung umfasst die Steuermechanik einen am Deckel angreifenden Steuerstößel, um den Deckel abhängig von der Stellung des Auszugprofils in eine Schließstellung oder eine Öffnungsstellung zu überführen. Der Steuerstößel kann abhängig einer Auszugprofilstellung sowohl in Öffnungs- als auch in Schließrichtung des Deckels wirken. Bei einer Verlagerung des Auszugprofils in die Ruheposition des Beschattungsgebildes kann der Steuerstößel mit einer Zugkraft auf den Deckel wirken und diesen in eine geschlossene Position überführen. Bei einer Verlagerung des Auszugprofils in die Funktionsposition des Beschattungsgebildes kann der Steuerstößel mit einer Druckkraft auf den Deckel wirken und diesen in eine geöffnete Position verlagern. Somit kann vorteilhaft ein Öffnen und ein Schließen des Deckels mit relativ wenigen Bauteilen bewirkt werden.

In weiterer Ausgestaltung der Erfindung ist ein in den Deckel eingebrachtes Schließmoment des Zugmitteltriebs größer als das Öffnungsmoment des Steuerstößels. Bei einer Aktivierung des Zugmitteltriebs wird eine Steuerstößelfeder vorgespannt, der Deckel wird in die Zwischenstellung verlagert und dort gehalten, während das Beschattungsgebilde ausgefahren ist.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt einen Seitenbereich einer Ausführungsform der erfindungsgemäßen Beschattungsvorrichtung zur Beschattung einer Kraftfahrzeugscheibe,
- Fig. 2: eine Schnittdarstellung einer weiteren Ausführungsform der erfindungsgemäßen Beschattungsvorrichtung in einer Ruheposition des Beschattungsgebildes mit einem geschlossenem Deckel,
- Fig. 3: die Beschattungsvorrichtung von Fig. 2 mit dem geöffneten Deckel zu Beginn einer Verfahrbewegung eines Auszugprofils,
- Fig. 4: die Beschattungsvorrichtung von Fig. 3 mit dem geöffneten Deckel gegen Ende der Verfahrbewegung des Auszugprofils und
- Fig. 5: die Beschattungsvorrichtung von Fig. 4 bei Erreichen einer ausgefahrenen Funktionsposition des Auszugprofils mit dem Deckel in einer Zwischenstellung.

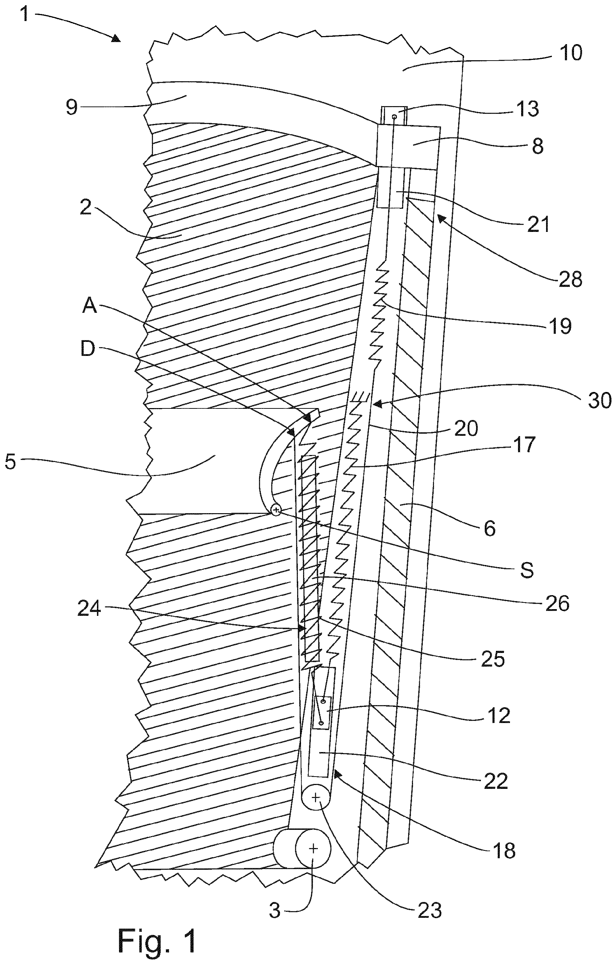

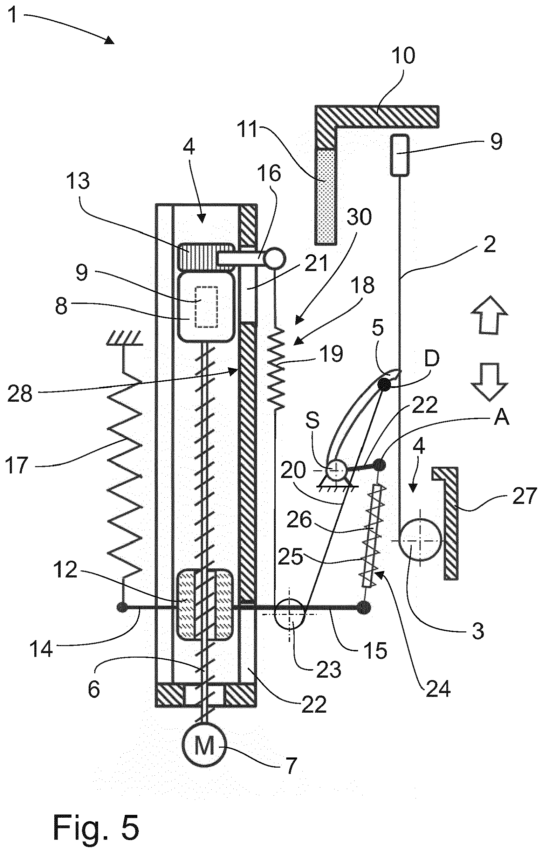

Eine Beschattungsvorrichtung 1 für eine Kraftfahrzeugscheibe 11 einer Fondseitentür gemäß den Fig. 1 bis 5 ist für einen Einsatz in einem Personenkraftwagen vorgesehen. Die Beschattungsvorrichtung 1 umfasst ein Beschattungsgebilde 2, welches als ein flexibles Flächengebilde gestaltet ist und beispielsweise aus einer Textil- oder Kunststoffbahn bestehen kann. Das Beschattungsgebilde 2 erfüllt den Zweck, übermäßigen Lichteinfall in ein Fahrzeuginneres zu vermeiden und ist entsprechend wenig lichtdurchlässig. Das Beschattungsgebilde 2 ist an einer seiner Stirnseiten in herkömmlicher Weise mit einer Wickelwelle 3 verbunden, auf welcher das Beschattungsgebilde 2 auf- und abwickelbar ist. An einer der Wickelwelle 3 abgewandten Seite des Beschattungsgebildes 2 weist das Beschattungsgebilde 2 ein Auszugprofil 9 auf. In seinen Seitenbereichen weist das Auszugprofil 9 Mitnehmer 8 auf, welche in Führungsschienen 28 verlagerbar sind. Die Führungsschienen 28 sind in Seitenbereichen der Fondseitentür auf zwei gegenüberliegenden Seiten der zu beschattenden Kraftfahrzeugscheibe 11 angeordnet und erstrecken sich in vertikaler Richtung bis an einen Türholm 10.

Das Beschattungsgebilde 2 und die drehbar gelagerte Wickelwelle 3 sind in einem fahrzeugseitigen Schacht 4 angeordnet und in einem betriebsbereit montierten Zustand der Beschattungsvorrichtung 1 von einer Türinnenverkleidung 27 verdeckt. Weiterhin fahrzeugseitig angeordnet sind ein Antrieb 7 und zwei Antriebsübertragungsmittel 6. Die Lage des Antriebs 7 kann abhängig eines vorhandenen Bauraums gewählt werden, die Antriebsübertragungsmittel 6 flankieren die Kraftfahrzeugscheibe 11 in ihren beiden Seitenbereichen.

Der Antrieb 7 umfasst einen Elektromotor mit einem Zahnradabtrieb. Die Antriebsübertragungsmittel 6 weisen durch den Zahnradabtrieb angetriebene flexible Gewindesteigungskabel auf. Eine Rotation des Elektromotors und des damit verbundenen Zahnradabtriebs wird in eine translatorische Bewegung der Antriebsübertragungsmittel 6 übersetzt. Die Antriebsübertragungsmittel 6 verlaufen in den Seitenbereichen der Kraftfahrzeugscheibe 11 parallel zu den Führungsschienen 28 und sind über Mitnehmer 8 mit dem Auszugprofil 9 verbunden. Es ist jeweils ein Mitnehmer 8 pro Seitenbereich vorgesehen, um eine synchrone Verlagerung des Beschattungsgebildes 2 zu gewährleisten.

Aus Übersichtlichkeitsgründen ist nur jeweils ein Seitenbereich der Fondseitentür in den Fig. 1 bis 5 dargestellt. Alternativ kann als Antriebsübertragungsmittel 6 auch ein Antriebsseil wie bspw. ein Bowdenzug oder ein biegeschlaffes Zugseil Anwendung finden.

In der Fig. 1 ist ein Ausbruch einer Fondseitentür dargestellt. Die Kraftfahrzeugscheibe 11 ist von dem Beschattungsgebilde 2 verdeckt und somit nicht erkennbar. Die Türinnenverkleidung 27 und der Schacht 4 sind hier aus Gründen der verbesserten Übersichtlichkeit nicht dargestellt. Das Auszugprofil 9 befindet sich in einer vollausgefahrenen Funktionsposition und schließt mit einem Türholm 10 ab.

Der Schacht 4 weist in dem dargestellten Seitenbereich die Führungsschiene 28 auf, in der ein unteres Mitnahmeelement 12 und ein oberes Mitnahmeelement 13, welche im dargestellten Ausführungsbeispiel gleitbewegliche Nutensteine sind, vertikal verlagerbar sind. Das Antriebsübertragungsmittel 6 ist mit dem Mitnehmer 8 verbunden, welcher wiederum mit dem Auszugprofil 9 verbunden ist. Das Auszugprofil 9 ist mittels des Mitnehmers 8 in der Führungsschiene 28 geführt verlagerbar.

In einem der Kraftfahrzeugscheibe 11 zugewandten Bereich einer Türbrüstung ist ein Durchtritt in dem Schacht 4 angeordnet, in welchem die Wickelwelle 3 untergebracht ist. Der Durchtritt erstreckt sich über eine gesamte Längserstreckung der Kraftfahrzeugscheibe 11 und ist derart gestaltet, dass das Auszugprofil 9 und das Beschattungsgebilde 2 durch ihn hindurchtreten können. Der Durchtritt ist durch einen längserstreckten, schwenkbeweglich gelagerten Deckel 5 verschließbar. Eine Schwenkachse des Deckels 5 ist türfest angeordnet. Der Deckel 5 überdeckt in seiner Schließposition den Durchtritt des Schachts 4 vollständig.

In einem Seitenbereich des Deckels 5 ist ein Steuerstößel 24 vorgesehen, der eine Steuerstößelfeder 25 und einen Steuerstößelkörper 26 umfasst. Der Steuerstößel 24 greift an einem Hebel 29 des Deckels 5 an einem Angriffspunkt A an und wirkt sowohl in Druck- als auch in Zugrichtung auf diesen, um den Deckel 5 in eine vollständig geöffnete oder vollständig geschlossene Position zu verlagern.

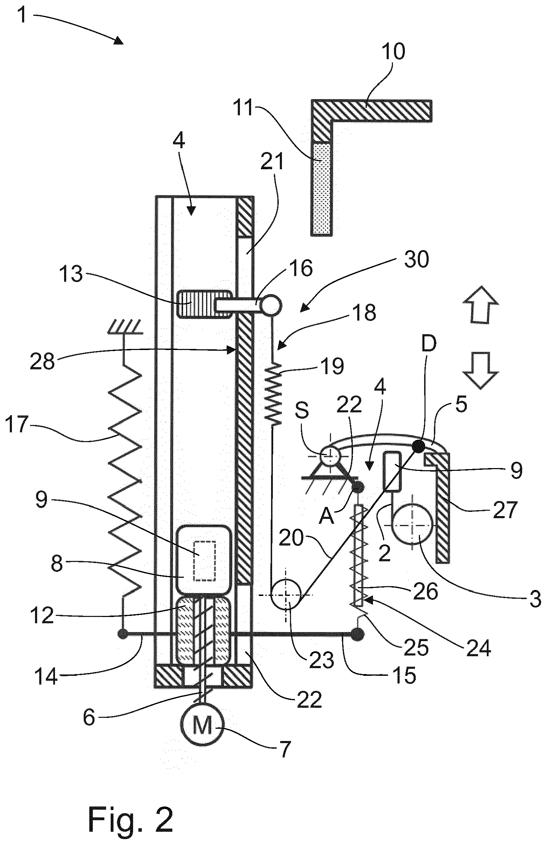

Das untere Mitnahmeelement 12 weist im dargestellten Ausführungsbeispiel der Fig. 2 bis 5 zwei horizontal abragende Ausleger 14, 15 auf. An dem ersten Ausleger 14 ist eine Zugfeder 17 befestigt, die an einer dem ersten Ausleger 14 abgewandten Seite mit einer Fahrzeugstruktur verbunden ist. Auf der dem ersten Ausleger 14 abgewandten Seite des unteren Mitnahmeelements 12 ist der zweite Ausleger 15 angeordnet. An diesem greift der Steuerstößel 24 an. An der dem zweiten Ausleger 15 abgewandten Seite des Steuerstößels 24 ist dieser mit dem Angriffspunkt A des Hebels 29 verbunden. Der zweite Ausleger 15 ist entlang einer vertikal erstreckten Begrenzungsnut 22 geführt verlagerbar.

Die Begrenzungsnuten 21, 22 geben einen maximalen Verlagerungsweg der Mitnahmeelemente 12, 13 vor. In den Fig. 2 bis 5 sind die Ausleger 15, 16 in den Begrenzungsnuten 21, 22 geführt verlagerbar. In der Fig. 1 sind die Mitnahmeelemente 12, 13 als Nutensteine dargestellt, die in den Begrenzungsnuten 21, 22 gleitbeweglich verlagerbar sind.

Das untere Mitnahmeelement 12 weist eine vertikale Durchgangsöffnung auf. Diese Durchgangsöffnung ist von dem Antriebsübertragungsmittel 6 durchdrungen, das in seinem oberen Bereich mit dem Mitnehmer 8 und in seinem unteren Bereich mit dem Antrieb 7 verbunden ist.

Zum Verschwenken des Deckels 5 ist eine Steuermechanik 30 vorgesehen, welche den Steuerstößel 24 und einen Zugmitteltrieb 18 umfasst. Der Steuerstößels 24 dient einer Verlagerung des Deckels 5 in die vollständig geöffnete Position bei einer Verlagerung des Beschattungsgebildes 2 in Richtung des Türholms 10 sowie einem vollständigen Schließen des Deckels 5 nach der Verlagerung des Beschattungsgebildes 2 in seine Ruheposition. In vollständig geöffneter Stellung des Deckels 5 kann das Auszugprofil 9, das dicker ist als das Beschattungsgebilde 2, durch den Durchtritt hindurchgeführt werden.

Der Zugmitteltrieb 18 der Steuermechanik 30 umfasst das untere Mitnahmeelement 12, das obere Mitnahmeelement 13, ein federelastisches Element 19, einen Seilabschnitt 20, eine Umlenkung 23 in Form einer Umlenkrolle, die Zugfeder 17 sowie den Steuerstößel 24.

Die erfindungsgemäße Beschattungsvorrichtung 1 kann die Steuermechanik 30 zur Verlagerung des Deckels 5 gespiegelt in ihren beiden Seitenbereichen aufweisen. Alternativ kann der Deckel 5 an einer Seite schwenkbeweglich gelagert sein und auf einer gegenüberliegenden Seite eine Steuermechanik 30 aufweisen.

Die Fig. 2 bis 5 zeigen jeweils auf einer in ihrer Betrachtungsebene linken Seite die Führungsschiene 28 zur Verlagerung des Auszugprofils 9 mittels des Antriebsübertragungsmittels 6. Weiterhin auf der linken Seite ersichtlich sind das untere und das obere Mitnahmeelement 12, 13 und die Zugfeder 17 der Steuermechanik 30. Auf der jeweils rechten Seite der Fig. 2 bis 5 sind die Türinnenverkleidung 27, der Schacht 4 mit dem schwenkbeweglich um eine Schwenkachse S gelagerten Deckel 5, das federelastische Element 19 sowie der Steuerstößel 24, die Umlenkung 23 und die Wickelwelle 3 dargestellt. Weiterhin in der Betrachtungsebene auf der rechten Seite ersichtlich ist das von der Wickelwelle 3 abwickelbare Beschattungsgebilde 2 mit dem Auszugprofil 9 dargestellt.

Die Beschattungsvorrichtung 1 ist gemäß den Fig. 2 bis 5 in einer Ruheposition des Beschattungsgebildes 2 dargestellt. Das Beschattungsgebilde 2 ist dabei auf der Wickelwelle 3 aufgewickelt, das Auszugprofil 9 ist vollständig in den Schacht 4 versenkt und der Deckel 5 ist vollständig geschlossen. Das untere Mitnahmeelement 12 ist in seiner unteren Position, in der die an ihm befestigte Zugfeder 17 über den ersten Ausleger 14 vorgespannt ist. Dabei ist die Steuerstößelfeder 25 über den zweiten Ausleger 15 vorgespannt. Die Steuerstößelfeder 25 greift an dem Angriffspunkt A des Hebels 29 an und hält den Deckel 5 geschlossen. Das federelastische Element 19 des Zugmitteltriebs 18, der mit einem Deckelangriffspunkt D verbunden ist, ist in dieser Position des Deckels 5 nicht vorgespannt. Die Zugfeder 17, die einerseits mit dem Ausleger 14 und anderseits mit einer Karosseriestruktur verbunden ist, ist in der Ruheposition des Beschattungsgebildes 2 federelastisch vorgespannt.

Der Steuerstößel 24 und der Zugmitteltrieb 18 können alternativ auch in nur einem Bereich des Deckels 5 wirken. Das untere Mitnahmeelement 12 kann alternativ Bohrungen gemäß Fig. 1 aufweisen, mittels derer es mit dem Steuerstößel 24 und der Zugfeder 17 verbunden ist, wobei die Mitnahmeelemente 12, 13 in dieser Ausführungsform gemäß Fig. 1 keine Ausleger aufweisen, sondern die Steuerstößelfeder 24 und die Zugfeder 17 mit Federösen in die Bohrungen des unteren Mitnahmeelements 12 eingehängt sind. Ebenso kann das obere Mitnahmeelement 13 gemäß der Fig. 1 eine Bohrung statt eines Auslegers 16 aufweisen, an welcher der Zugmitteltrieb 18 mit einer Federöse oder ähnlichem eingehängt ist.

Am Angriffspunkt A greift das federelastische Element 19 an, das im abgebildeten Ausführungsbeispiel schematisch durch eine Schraubenfeder dargestellt ist, die in entsprechende Seilabschnitte integriert ist und an die der Seilabschnitt 20 angefügt ist. Das federelastische Element 19 ist gemäß den Fig. 2 bis 5 an seiner dem Deckel 5 abgewandten Seite mit einem oberen Ausleger 16 verbunden, welcher horizontal von dem oberen Mitnahmeelement 13 abragt und in einer vertikal erstreckten oberen Begrenzungsnut 21 wie bereits erläutert geführt verlagerbar ist.

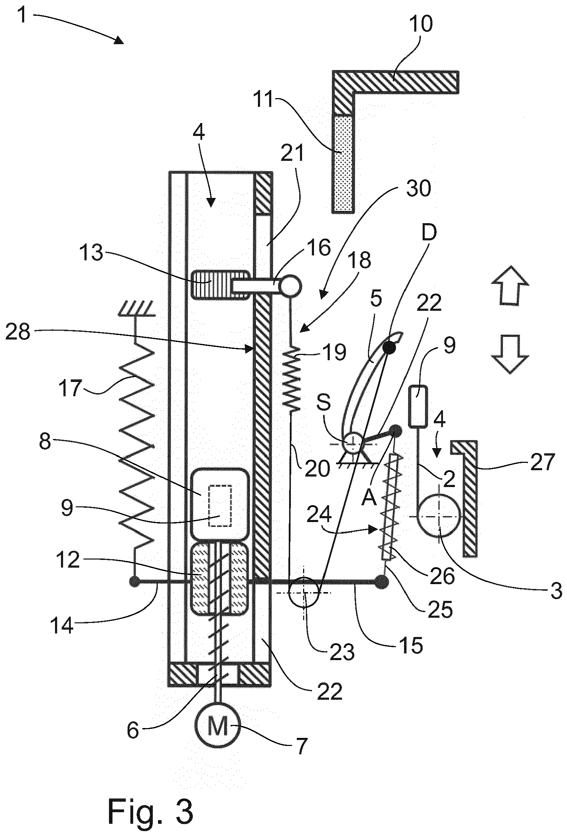

Zur Verlagerung des Beschattungsgebildes 2 von seiner Ruheposition in seine Funktionsposition wird der Antrieb 7 bestromt. Dabei wird das Antriebsübertragungsmittel 6 entlang der Führungsschiene 28 in einer Betrachtungsebene der Fig. 3 nach oben verlagert. Die bis dahin vorgespannte Zugfeder 17 wird nun entlastet und wirkt auf den ersten Ausleger 14 des unteren Mitnahmeelements 12, welches dadurch entlang der Führungsschiene 28 nach oben in Richtung des Türholms 10 verlagert wird. Der ebenfalls an dem unteren Mitnahmeelement 12 befestigte zweite Ausleger 15 wird entlang der unteren Begrenzungsnut 22 nach oben verlagert, bis ein oberes Ende der Begrenzungsnut 22 erreicht ist, das als Endanschlag für das untere Mitnahmeelement 12 dient. Die Steuerstößelfeder 25, die am zweiten Ausleger 15 befestigt ist, wird dabei entspannt, bis sie soweit komprimiert ist, dass sie als Stößel wirkt. Nun wird durch den Steuerstößel 24 eine Druckkraft in den Hebel 29 eingeleitet, die den Deckel 5 öffnet. Der Steuerstößelkörper 26 des Steuerstößels 24 dient hier als ein Stabilisator, welcher die Steuerstößelfeder 25 bei einer Druckbelastung an einem seitlichen Ausknicken hindert.

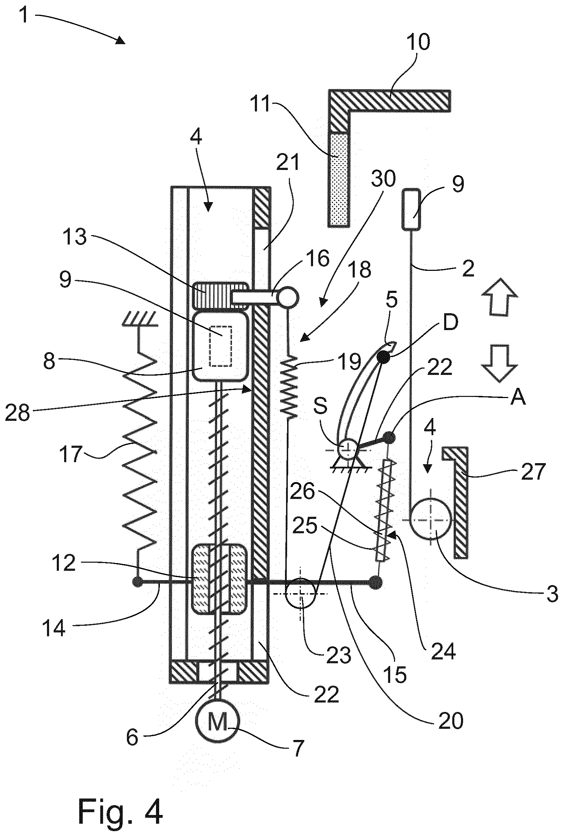

Während der Verlagerung des Beschattungsgebildes 2 in seine Funktionsposition bleibt der Deckel 5 gemäß den Fig. 3 und 4 geöffnet, solange das Auszugprofil 9 nicht auf das obere Mitnahmeelement 13 und dieses nicht auf den Zugmitteltrieb 18 wirkt.

Zur Verlagerung des Deckels 5 aus einer vollständig geöffneten Position in eine Zwischenstellung, in welcher der Deckel 5 annähernd berührungsfrei oder mit leichtem Druck an dem ausgefahrenen Beschattungsgebilde 2 anliegt, steht das Auszugprofil 9 mit einem Zugmitteltrieb 18 in Wirkverbindung, welcher an einem Deckelangriffspunkt D in der Schließrichtung des Deckels 5 auf den Deckel 5 wirken kann.

Bei einer Annäherung des Beschattungsgebildes 2 an seine von der Wickelwelle 3 vollständig abgewickelte Funktionsposition wird das obere Mitnahmeelement 13, welches in den Ausführungsbeispielen ein Nutenstein ist, der in die Bewegungsbahn des Mitnehmers 8 ragt, von dem mit dem Auszugprofil 9 verlagerbaren Mitnehmer 8 mitgenommen. Der an dem oberen Mitnahmeelement 13 angebrachte Ausleger 16 wird entlang der oberen Begrenzungsnut 21 verlagert. Dabei wird das federelastische Element 19 des Zugmitteltriebs 18 gespannt. Der mit dem federelastischen Element 19 verbundene Seilabschnitt 20 wird über die drehbare Umlenkung 23 umgelenkt und leitet eine Zugkraft über den Deckelangriffspunkt D in den Deckel 5 ein, welche zur Verlagerung des Deckels 5 in die Zwischenstellung führt.

Die Umlenkung 23 kann alternativ mit dem Führungselement 8 gegenläufig bewegungsgekoppelt sein, sodass bei der Verlagerung des Auszugsprofils 9 in die Funktionsposition, also nach oben in Richtung des Türholms 10, die Umlenkung 23 nach unten verlagert und eine Zugkraft in den Zugmitteltrieb 18 eingebracht wird, die zur Verlagerung des Deckels 5 in die Zwischenstellung führt.

Die Umlenkung 23 ist hier als drehbewegliche Umlenkrolle dargestellt, sie kann auch alternativ beispielsweise eine feststehende Umlenkgabel oder ein Umlenkzapfen sein. Bei einer nicht dargestellten Ausführungsform kann die federelastische Ausgestaltung des Zugmitteltriebs 18 durch federelastisch nachgiebige Anlenkbereiche an den oberen Mitnahmeelement 13 und an dem Deckel 5 realisiert sein.

Eine Zugkraft des federelastischen Elements 19 übersteigt eine Zugkraft der Zugfeder 17. Bei einer Krafteinleitung durch den Zugmitteltrieb 18 in den Deckel 5 in die Schließrichtung des Deckels 5 wird die Steuerstößelfeder 25 komprimiert. Der Federstößel wird weiterhin nach unten, also in Richtung der Wickelwelle 3, gedrückt. Der Federstößel 24 verlagert das untere Mitnahmeelement 12 in der unteren Begrenzungsnut 22 nach unten und die mit dem Mitnahmeelement 12 verbundene Zugfeder 17 wird gespannt.

Eine Federkraft des federelastischen Elements 19 und eine Länge des Seilabschnitts 20 sind konstruktiv so ausgelegt, dass sie nicht zu einem vollständigen Schließen des Deckels 5 führen, sondern den Deckel 5 in die Zwischenstellung verlagern, in welcher der Deckel 5 eine zum Beschattungsgebilde 2 berührungsfrei angenäherte Position einnimmt oder leicht an dem Beschattungsgebilde 2 anliegt.

## Patentansprüche

1. Beschattungsvorrichtung (1) für eine Kraftfahrzeugscheibe (11) mit einem Beschattungsgebilde (2) mit einem stirnseitig an dem Beschattungsgebilde (2) angebrachten Auszugprofil (9), welches mithilfe von Antriebsübertragungsmitteln (6) zwischen einer abgesenkten Ruhestellung und einer ausgefahrenen Beschattungsstellung in fahrzeugfesten seitlichen Führungsschienen (28) verlagerbar ist, wobei das Beschattungsgebilde (2) in der Ruhestellung durch einen Durchtritt hindurch in einen fahrzeugfesten Schacht (4) abgesenkt ist, wobei der Durchtritt durch einen zwischen einer Öffnungs- und einer Schließstellung beweglichen Deckel (5) verschließbar ist, und wobei eine Steuermechanik (30) zum Öffnen und Schließen des Deckels (5) vorgesehen ist, die an eine Verlagerungsbewegung des Auszugprofils (9) gekoppelt ist, wobei die Steuermechanik (30) einen Zugmitteltrieb (18) aufweist, der abhängig von einem Hindurchtreten des Auszugprofils (9) durch den Durchtritt eine Steuerung des Deckels (5) zwischen einer Öffnungsstellung und einer Zwischenstellung vornimmt, die sich zwischen der Öffnungs- und der Schließstellung des Deckels (5) befindet, und in der der Deckel (5) in einer Vollauszugstellung des Auszugprofils (9) berührungsfrei oder mit leichtem Druck an dem Beschattungsgebilde (2) anliegt, **dadurch gekennzeichnet, dass** der Zugmitteltrieb (18) sich zwischen einem im Bereich wenigstens einer seitlichen Führungsschiene (28) angeordneten Mitnehmer (8) und einem mit dem Deckel (5) drehfesten Angriffsbereich (A) erstreckt.

2. Beschattungsvorrichtung nach Anspruch 1, **dadurch gekennzeichnet, dass** der Zugmitteltrieb (18) zumindest abschnittsweise federelastisch ausgeführt ist.

3. Beschattungsvorrichtung nach Anspruch 2, **dadurch gekennzeichnet, dass** der Zugmitteltrieb (18) ein elastisches Seil oder wenigstens ein federelastisches Element (19) umfasst.

4. Beschattungsvorrichtung nach Anspruch 1, **dadurch gekennzeichnet, dass** der Zugmitteltrieb (18) eine Umlenkung (23) aufweist, die eine Bewegungsrichtung des Mitnehmers (8) bei einer Überführung des Auszugprofils (9) aus der Ruhestellung in die Funktionsstellung in eine Schließbewegung des Deckels (5) überträgt.

5. Beschattungsvorrichtung nach einem der vorhergehenden Ansprüche, **dadurch gekennzeichnet, dass** die Steuermechanik einen am Deckel (5) angreifenden Steuerstößel (24) umfasst, der in entgegengesetzten Zug- und Druckrichtungen an dem Deckel (5) angreift, um den Deckel (5) in die Schließstellung oder die Öffnungsstellung zu überführen abhängig von der Stellung des Auszugprofils (9).

6. Beschattungsvorrichtung nach Anspruch 5, **dadurch gekennzeichnet, dass** das in den Deckel (5) eingebrachte Schließmoment des Zugmitteltriebs (18) größer ist als das Öffnungsmoment des Steuerstößels (24).

## Claims

1. Shading device (1) for a motor vehicle window (11), having a shading structure (2) with an extension profile (9) attached to the end side of the shading structure (2), said extension profile (9) being displaceable in lateral guide rails (28) secured to the vehicle between a lowered rest position and an extended shading position with the aid of drive transmission means (6), wherein, in the rest position, the shading structure (2) has been lowered through a passage into a compartment (4) secured to the vehicle, wherein the passage is closable by a cover (5) that is movable between an open and a closed position, and wherein a control mechanism (30) for opening and closing the cover (5) is provided, said control mechanism (30) being coupled with a displacement movement of the extension profile (9), wherein the control mechanism (30) has a traction mechanism drive (18) which, depending on whether the extension profile (9) has passed through the passage, controls the cover (5) between an open position and an intermediate position which is located between the open position and closed position of the cover (5), and in which the cover (5), in a fully extended position of the extension profile (9), rests on the extended shading structure (2) without contact or with slight pressure,
**characterized in that**
the traction mechanism drive (18) extends between a driver (8), arranged in the region of at least one lateral guide rail (28), and a region of action (A) rotationally fixed to the cover (5).

2. Shading device according to claim 1, **characterized in that** the traction mechanism drive (18) is embodied at least partially in a spring-elastic manner.

3. Shading device according to claim 2, **characterized in that** the traction mechanism drive (18) comprises an elastic cord or at least one spring-elastic element (19).

4. Shading device according to claim 1, **characterized in that** the traction mechanism drive (18) has a deflector (23) which converts a direction of movement of the driver (8), when the extension profile (9) is transferred from the rest position to the functional position, into a closing movement of the cover (5).

5. Shading device according to any of the preceding claims, **characterized in that** the control mechanism comprises a control pushrod (24) that acts on the cover (5), said control pushrod (24) acting on the cover (5) in opposite pulling and pushing directions, in order to transfer the cover (5) to the closed position or the open position depending on the position of the extension profile (9).

6. Shading device according to claim 5, **characterized in that** the closing moment, introduced into the cover (5), of the traction mechanism drive (18) is greater than the opening moment of the control pushrod (24).

## Revendications

1. Dispositif d'ombrage (1) pour une vitre (11) d'un véhicule automobile comportant une structure d'ombrage (2) avec un profilé de tirage (9) attaché sur le front de la structure d'ombrage (2), ledit profilé étant déplaçable entre une position de repos abaissée et une position d'ombrage étirée par le biais de moyens de transmission d'entrainement (6) dans des rails de guidage (28) latérales fixés au véhicule, dans lequel la structure d'ombrage (2) en position de repos est abaissée à travers un passage dans un compartiment (4) fixé au véhicule, dans lequel le passage peut être fermé par un couvercle (5) mobile entre une position ouverte et une position fermée, et dans lequel un mécanisme de contrôle (30) pour ouvrir et fermer le couvercle (5) est prévu et couplé à un mouvement de déplacement du profilé de tirage (9), dans lequel le mécanisme de contrôle (30) présente un entrainement de moyens de traction (18) pour effectuer, en fonction du profilé de tirage (9) passant à travers le passage, une commande du couvercle (5) entre une position ouverte et une position intermédiaire qui se trouve entre la position ouverte et la position fermée du couvercle (5), et où le couvercle (5), dans une position complètement étirée du profilé de tirage (9), s'appuie sur la structure d'ombrage (2) sans contact ou avec une légère pression,
**caractérisé en ce que**
l'entrainement de moyens de traction (18) s'étend entre un entraineur (8) disposé dans la zone d'au moins un rail de guidage (28) latérale et une zone d'action (A) solidaire en rotation au couvercle (5).

2. Dispositif d'ombrage selon la revendication 1, **caractérisé en ce que** l'entrainement de moyens de traction (18) présente élasticité de ressort au moins dans certaines parties.

3. Dispositif d'ombrage selon la revendication 2, **caractérisé en ce que** l'entrainement de moyens de traction (18) comprend une corde élastique ou au moins un élément à élasticité de ressort (19).

4. Dispositif d'ombrage selon la revendication 1, **caractérisé en ce que** l'entrainement de moyens de traction (18) présente un déflecteur (23) pour transformer une direction de mouvement de l'entraineur (8), lors d'une transmission du profilé de tirage (9) de la position de repos à la position fonctionnelle, en un mouvement de fermeture du couvercle (5).

5. Dispositif d'ombrage selon l'une quelconque des revendications précédentes, **caractérisé en ce que** le mécanisme de contrôle comprend un poussoir de commande (24) s'engageant sur le couvercle (5), ledit poussoir s'engageant sur le couvercle (5) dans des directions pousse-tire opposées, afin de transférer le couvercle (5) vers la position fermée ou la position ouverte, en fonction de la position du profilé de tirage (9).

6. Dispositif d'ombrage selon la revendication 5, **caractérisé en ce que** le moment de fermeture de l'entrainement de moyens de traction (18) introduit dans le couvercle (5) est supérieure au moment d'ouverture du poussoir de commande (24).
